# EUROPÄISCHE PATENTANMELDUNG

(11) **EP 2 270 346 A2**
(43) Veröffentlichungstag der Anmeldung: **05.01.2011**
(21) Anmeldenummer: 10165929.0
(22) Anmeldetag: 15.06.2010
(51) Int. Cl.: F16C 19/38

(54) **Lageranordnung und gelagertes Bauteil für ein Differentialgetriebe**

(30) Priorität: 30.06.2009 DE 102009031068
(71) Anmelder: Aktiebolaget SKF, 41 550 Göteborg (SE)
(72) Erfinder: Friedrich, Thomas, 97262, Hausen (DE); Husslein, Wolfgang, 97447, Gerolzhofen (DE); Krug, Udo, 97531, Theres (DE)
(74) Vertreter: Schonecke, Mitja

(57) **Zusammenfassung**

Bei einer Lageranordnung mit wenigstens zwei axial beabstandeten Wälzlagern ist wenigstens eines als Kegelrollenlager ausgeführt ist, wobei das Kegelrollenlager eine Anzahl kegelstumpfartiger Wälzkörper aufweist. Der Kegelwinkel beträgt zwischen 20° und 33°.

## Beschreibung

Die vorliegende Erfindung betrifft eine Lageranordnung mit wenigstens zwei axial beabstandeten Wälzlagern, von denen wenigstens eines als Kegelrollenlager ausgeführt ist, wobei das Kegelrollenlager eine Anzahl kegelstumpfartiger Wälzkörper aufweist. Die Erfindung betrifft ferner ein gelagertes Bauteil für ein Differentialgetriebe.

Lageranordnungen der eingangs genannten Art finden insbesondere im Automobilbereich Einsatz. Sie werden beispielsweise in Radlagern oder zur Lagerung von Wellen der Differentialgetriebe eingesetzt. Bei der anwendungsbezogenen Auslegung der Kegelrollenlagerungen kommt es maßgeblich auf die Wahl des sogenannten Kegelwinkels an. Dieser Kegelwinkel bezeichnet den Winkel zwischen einer gedachten Symmetrielinie der kegelstumpfartigen Wälzkörper und der radialen Richtung der Lageranordnung. Insbesondere die Tragzahl der Kegelrollenlagerungen hängt vom gewählten Kegelwinkel der Lagerung ab.

Beim Einsatz von Wälzlagerungen im Allgemeinen ist im Bereich hoher Drehzahlen zu beachten, dass es zu einer unerwünschten Erwärmung der Bauteile der Lagerung kommen kann. Dies wirkt sich insbesondere negativ auf die Temperatur des eingesetzten Schmierstoffs der Lagerung aus. Bei Verwendung von Zentralschmiersystemen zur durchgängigen Sicherstellung der Schmierung mehrerer Lager in einem Fahrzeug erhöht sich bei erhöhter Wärmeabgabe durch die Lager ebenfalls die erforderliche Kühlleistung für den Schmierstoff.

Es ist Aufgabe der vorliegenden Erfindung, eine besonders reibungsarme Lageranordnung und ein gelagertes Bauteil für ein Differentialgetriebe, das für hohe Drehzahlen ausgelegt ist, bereitzustellen.

Diese Aufgabe wird durch eine Lageranordnung mit den Merkmalen des Patentanspruchs 1 und ein Bauteil mit den Merkmalen des Patentanspruchs 7 gelöst. Vorteilhafte Ausgestaltungen sind Gegenstand der jeweils abhängigen Unteransprüche.

Gemäß Patentanspruch 1 wird eine Lageranordnung mit wenigstens zwei axial beabstandeten Wälzlagern, von denen wenigstens eines als Kegelrollenlager ausgeführt ist angegeben, wobei das Kegelrollenlager eine Anzahl kegelstumpfartiger Wälzkörper aufweist,. Der Kegelwinkel der Wälzkörper beträgt zwischen 20° und 33°.

Bei bekannten Kegelrollenlagerungen betrug der Kegelwinkel insbesondere im Automobilbereich 20° oder weniger. Es zeigte sich jedoch überraschenderweise, dass bei einer Steigerung des Kegelwinkels in den Bereich von 20° bis 33° eine deutliche Reduzierung der im Lager auftretenden Reibung möglich ist. Diese führt zu einer verringerten Wärmeentwicklung bei Betrieb der Lageranordnung, so dass insbesondere der Kühlaufwand für ein Schmiermittel deutlich reduziert ist. Das zweite Wälzlager dient als Gegenlager zum hauptsächlich belasteten Kegelrollenlager und kann beispielsweise als Kegelrollenlager, Schrägkugellager, Axialzylinderrollenlager, Axialrillenkugellager oder Radialrillenkugellager ausgeführt sein. Die Wahl bestimmt sich je nach Anwendung der Lageranordnung unter den gewählten Einsatzbedingungen nach Belastung und erforderlicher Drehzahl.

In einer vorteilhaften Ausgestaltung der Erfindung ist ein weiteres Kegelrollenlager vorgesehen und die Kegelrollenlagerungen sind in O-Anordnung angeordnet. Diese Art der Anordnung der Kegelrollenlagerungen ist insbesondere im Automobilbereich häufig anzutreffen. Die Namensgebung entsteht dadurch, dass bei Schnittansicht des Lagers gedachte Linien durch die vier Druckpunkte der vier sichtbaren Wälzkörper (zwei pro Lager) mit deren Laufflächen bei Verlängerung eine Raute bilden, die als schematisches O anzusehen ist. Demgegenüber ist es ebenfalls möglich, zwei Kegelrollenlager in der so genannten X-Anordnung, also genau umgekehrt anzuordnen. Es zeigte sich, dass der Kegelwinkel von 20° bis 33° insbesondere bei Kegelrollenlagerungen in O-Anordnung von Vorteil ist und zu einer besonders reduzierten Reibung führt.

Optimalerweise beträgt der Kegelwinkel 24° 12". Bei diesem Kegelwinkel ist die Reduzierung der Reibung im Lager maximal. Somit lässt sich insbesondere bei diesem Kegelwinkel von 24° 12"eine besonders hohe Reduktion der Wärmeentwicklung in der Lageranordnung erzielen.

Um die Reibung in der Lageranordnung weiter zu reduzieren ist es möglich, die Anzahl der in jeder der Kegelrollenlagerungen verwendeten Wälzkörper zu reduzieren. Gemäß einer bevorzugten Ausführungsform der Erfindung beträgt die Anzahl der Wälzkörper jeder der Kegelrollenlagerungen, gerundet als ganze Zahl, jeweils zwischen 60 und 90%, bevorzugt 70 bis 75%, besonders bevorzugt 73% der vollrolligen Bestückung. Dabei muss allerdings ein Kompromiss zur dann reduzierten Tragzahl des Kegelrollenlagers gefunden werden. Bei bekannten Ausführungen von derartigen Lageranordnungen, die beispielsweise in Differentialgetrieben eingesetzt werden, beträgt die üblicherweise verwendete Anzahl bei einem Lagerdurchmesser von 120 mm 37 Wälzkörper. Gemäß der bevorzugten Ausführungsform der Erfindung beträgt die Anzahl der Wälzkörper nun 27. Bei einer Lageranordnung mit entsprechenden Kegelrollenlagerungen mit einem Kegelwinkel von 24° 12" und einer 73%igen Bestückung an Wälzkörpern lässt sich eine Reibungsreduzierung gegenüber bekannten Lagern von über 40% erzielen.

Gemäß Patentanspruch 7 wird ein gelagertes Bauteil für ein Differentialgetriebe angegeben, aufweisend eine Welle mit einer endseitig angeordneten Zahnung, wobei das Bauteil eine Lageranordnung zu dessen drehbarer Lagerung aufweist. Die Lageranordnung ist als eine Lageranordnung nach einem der Ansprüche 1 bis 6 ausgeführt. So lässt sich die erfindungsgemäße Lageranordnung besonders vorteilhaft durch die reduzierte Reibung in Differentialgetrieben einsetzen, wo insbesondere bei Erhöhung der Geschwindigkeit höhere Drehzahlen und damit eine höhere Wärmeentwicklung anfällt. Es ist jeweils bei der Optimierung für die Einbausituation zu beachten, dass sich durch den erhöhten Kegelwinkel und die verminderte Rollenzahl die Tragzahl der Lageranordnung reduziert.

Alternative Anwendungsgebiete für die erfindungsgemäße Lageranordnung sind beispielsweise Radlager und Gewindetriebe.

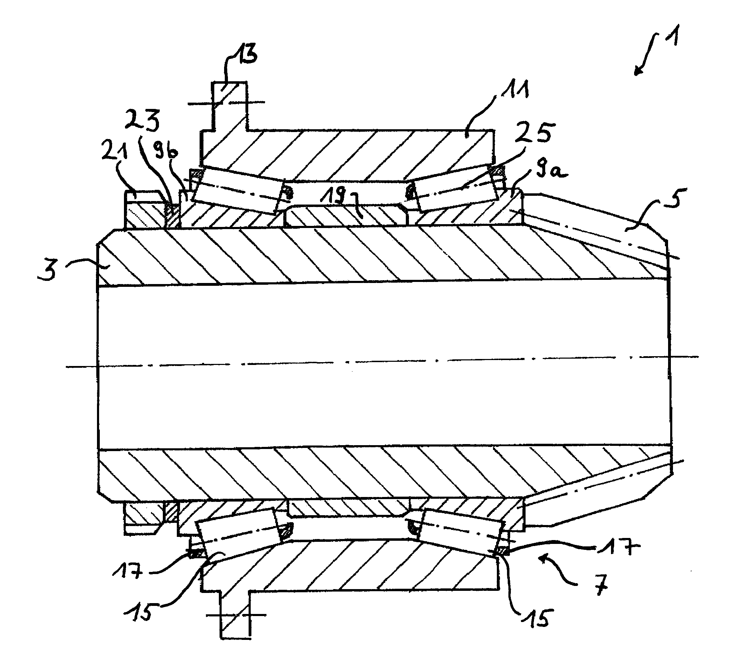

Weitere Vorteile und Ausgestaltungen der Erfindung ergeben sich aus dem nachfolgend beschriebenen Ausführungsbeispiel im Zusammenhang mit der beigefügten Figur.

In der Figur ist als Ausführungsbeispiel der Erfindung ein Ausgleichsrad 1 eines Differentialgetriebes gezeigt. Das Ausgleichsrad 1 umfasst eine Welle 3, bei der endseitig eine schräg verlaufende Zahnung 5 angeordnet ist. Die Welle kann dabei als Vollwelle oder Hohlwelle ausgeführt sein. Die schräg verlaufende Zahnung 5 ist einstückig mit der Welle 3 ausgebildet. Sie wirkt im Differentialgetriebe mit vergleichbar schräg ausgebildeten Zahnungen von zwei Achswellen zusammen.

Die Welle 3 muss zur Funktion im Differentialgetriebe drehbar gelagert sein. Sie ist daher mittels einer Lageranordnung 7 drehbar in einem nicht dargestellten Gehäuse gelagert. Die Lageranordnung 7 weist zwei Kegelrollenlagerungen auf, die jeweils einen Innenring 9a bzw. 9b aufweisen. Beide Kegelrollenlagerungen weisen zudem einen gemeinschaftlichen Außenring 11 auf. Am Außenring 11 ist ein flanschartiger Fortsatz 13 angebracht, mittels dem der Außenring 11 an einem nicht dargestellten Gehäuse des Differentialgetriebes befestigbar ist. Die Innenringe 9a bzw. 9b weisen Laufflächen für Kegelrollen 15 auf. Der Außenring 11 weist dazu korrespondierende Laufflächen auf. Über die Wälzkörper 15 und die Innenringe 9a bzw. 9b ist die Welle 3 gegenüber dem Außenring 11 und damit gegenüber dem damit verbundenen Gehäuse drehbar gelagert. Die Wälzkörper 15 werden jeweils in einem Käfig 17 geführt. Zwischen den Innenringen 9a und 9b ist ein Zwischenring 19 auf der Welle 3 angeordnet. Dieser dient zur definierten axialen Beabstandung der Innenringe 9a und 9b und somit der beiden Kegelrollenlager, die sich somit leicht montieren lassen. Zusätzlich dient der Zwischenring 19 zur Festlegung der axialen Spannkraft der beiden Innenringe 9a und 9b.

Zur axialen Sicherung der Lageranordnung 7 stößt der Innenring 9a axial gegen die Zahnung 5. Hier ergibt sich ein Vorteil aufgrund der einstückigen Ausbildung mit der Welle 3. Auf der gegenüberliegenden Seite der Welle 3 ist eine Spannmutter 21 zur axialen Fixierung vorgesehen. Zwischen der Spannmutter 21 und dem Innenring 9b ist ein Spannring 23 angeordnet.

Durch die dargestellten Kegelrollen 15 ist jeweils eine gedachte Symmetrielinie 25 gestrichelt eingezeichnet. Der Kegelwinkel zwischen der Linie 25 und der axialen Richtung der Welle 3 beträgt zwischen 20 und 33°. Bevorzugt beträgt der Kegelwinkel 24° 12". Hierdurch lässt sich eine signifikante Reduzierung der im Lager auftretenden Reibung im Vergleich zu bekannten Lagern mit einem Kegelwinkel von 20° oder weniger erreichen.

Zur zusätzlichen Reduzierung der im Lager auftretenden Reibung ist die Anzahl der verwendeten Kegelrollen 15 im Vergleich zur vollrolligen Bestückung reduziert. Sie beträgt im Idealfall, gerundet auf eine ganze Zahl, 73 % der Vollrolligkeit. Bei einem Standardlager, das bei einem Durchmesser von 120 mm beispielsweise 37 Rollen aufweist, würde ein Lager gemäß der Erfindung lediglich 27 Kegelrollen aufweisen. Dadurch lässt sich eine weitere Verringerung der Reibung erreichen. Der Käfig 17 ist entsprechend derart ausgebildet, dass er eine sichere Führung der Kegelrollen ermöglicht, ohne dass diese während der Bewegung des Lagers wandern können. Dies ist insbesondere aufgrund der verringerten Rollenzahl erforderlich.

Das gezeigte Ausgleichsrad 1 stellt eine bevorzugte Ausführungsform der Erfindung dar. Die reibungsverringerte Auslegung der Lageranordnung 7 lässt sich jedoch in anderen Einsatzbereichen außerhalb von Differentialgetrieben ebenfalls einsetzen, wenn eine Reduzierung der erzeugten Wärme von Vorteil ist.

Es hat sich gezeigt, dass insbesondere bei Differentialgetrieben bei hoher Geschwindigkeit in der Größenordnung von 5000 U/min, beispielsweise bei Traktor- oder LKW-Differentialgetrieben, aufgrund der hohen Reibung in bekannten Kegelrollenlagerungen eine starke Erhöhung der Temperatur die Folge war. Dass insbesondere bei Traktoren oftmals durch eine Zentralschmiereinheit bereitgestellte Schmieröl für die Kegelrollenlager musste daher mit erhöhtem Aufwand gekühlt werden. Durch die erfindungsgemäße Auslegung der Lageranordnung 7 lässt sich eine signifikante Reduzierung der Reibung erreichen, so dass pro Kegelrollenlager in der Lageranordnung 7 bis zu 800 Watt geringerer Wärmeleistung anfallen. Folglich ist der Kühlaufwand für das Schmieröl signifikant reduziert.

Zur Erlangung des erfindungsgemäßen Vorteils kann in einem alternativen Ausführungsbeispiel eines der Kegelrollenlager durch einen anderen Wälzlagertyp ersetzt werde, beispielsweise durch ein Schrägkugellager, Axialzylinderrollenlager, Axialrillenkugellager oder Radialrillenkugellager ausgeführt sein. Die Wahl bestimmt sich je nach Anwendung der Lageranordnung unter den gewählten Einsatzbedingungen nach Belastung und erforderlicher Drehzahl.

## Patentansprüche

1. Lageranordnung mit wenigstens zwei axial beabstandeten Wälzlagern, von denen wenigstens eines als Kegelrollenlager ausgeführt ist, wobei das Kegelrollenlager eine Anzahl kegelstumpfartiger Wälzkörper aufweist,
**dadurch gekennzeichnet,**
**dass** der Kegelwinkel zwischen 20° und 33° beträgt.

2. Lageranordnung nach Anspruch 1, bei der ein weiteres Kegelrollenlager vorgesehen ist, wobei die beiden Kegelrollenlagerungen in O-Anordnung angeordnet sind.

3. Lageranordnung nach einem der obigen Ansprüche, bei der der Kegelwinkel 24° 12" beträgt.

4. Lageranordnung nach einem der obigen Ansprüche, bei der die Anzahl der Wälzkörper jeder der Kegelrollenlagerungen, gerundet als ganze Zahl, jeweils zwischen 60 und 90% der vollrolligen Bestückung beträgt.

5. Lageranordnung nach einem der obigen Ansprüche, bei der zwei Innenringe vorgesehen sind, wobei jeder der Innenringe eine Lauffläche für Wälzkörper aufweist.

6. Lageranordnung nach einem der obigen Ansprüche, bei der die Innenringe axial durch einen radial umlaufenden Zwischenring beabstandet sind.

7. Gelagertes Bauteil für ein Differentialgetriebe, aufweisend eine Welle mit einer endseitig angeordneten Zahnung, wobei das Bauteil eine Lageranordnung zu dessen drehbarer Lagerung aufweist,
**dadurch gekennzeichnet,**
**dass** die Lageranordnung als Lageranordnung nach einem der Ansprüche 1 bis 6 ausgeführt ist.

8. Bauteil nach Anspruch 7, bei dem die Zahnung einstückig mit der Welle ausgeführt ist.

9. Bauteil nach Anspruch 7 oder 8, bei dem die Zahnung einen axialen Anschlag für einen Innenring eines der Wälzlager bildet.

10. Bauteil nach einem der Ansprüche 7 bis 9, bei dem am axial gegenüberliegenden Ende der Wälzlager eine Spannmutter zur axialen Fixierung der beiden Wälzlager auf der Welle angeordnet ist.

11. Bauteil nach Anspruch 10, bei dem zwischen der Spannmutter und dem benachbarten Innenring ein Zwischenring angeordnet ist.
